# EUROPEAN PATENT APPLICATION

(11) **EP 2 085 411 A2**
(43) Date of publication of application: **05.08.2009**
(21) Application number: 09150941.4
(22) Date of filing: 20.01.2009
(51) Int. Cl.: C08F 291/04, C09D 143/04, C08G 77/442, C09D 183/10, C08K 3/22, C08K 3/36, C23C 26/00, C23C 30/00

(54) **Metal-coating material, method for protecting metal, and light emitting device**

(30) Priority: 22.01.2008 JP 2008012072; 15.02.2008 JP 2008034233; 22.05.2008 JP 2008133910
(71) Applicant: JSR Corporation, Tokyo 104-0045 (JP)
(72) Inventor: Kanamori, Tarou, Chuo-ku, Tokyo 104-0045 (JP); Yoshii, Kimihiko, Chuo-ku, Tokyo 104-0045 (JP); Tazaki, Taichi, Chuo-ku, Tokyo 104-0045 (JP); Seko, Tomoaki, Chuo-ku, Tokyo 104-0045 (JP); Motonari, Masayuki, Chuo-ku, Tokyo 104-0045 (JP)
(74) Representative: TBK-Patent

(57) **Abstract**

Provided is a metal-coating material excellent in sulfur barrier property and transparency, a method for protecting a metal using the metal-coating material, and a light emitting device permitting high luminance and long life. The metal-coating material contains a polymer (A) obtained by subjecting at least one silane compound (a1) selected from the group consisting of at least one organosilane represented by the formula (1) : R¹ₙSi(OR²)₄₋ₙ, wherein R¹ means a monovalent organic group having 1 to 8 carbon atoms, with the proviso that when two organic groups are present, the groups may be the same or different from each other, R² denotes, independently of each other, an alkyl group having 1 to 5 carbon atoms or an acyl group having 1 to 6 carbon atoms, and n is an integer of 0 to 2, a hydrolyzate of the organosilane and a condensate of the organosilane, and a polymer (a2) having a silyl group containing a silicon atom bonded to a hydrolyzable group and/or a hydroxyl group to a hydrolyzing and condensation reaction.

## Description

### BACKGROUND OF THE INVENTION

### Field of the Invention

The present invention relates to a metal-coating material, a method for protecting a metal making use of this metal-coating material, and a light emitting device having a metal member or electrode protected by this metal-coating material.

### Description of the Related Art

Metals are used in various articles from daily needs to electronic parts because of having conductivity, gloss and the like. In, for example, a light emitting diode (LED), a silver plating is used as an electrode. Since this silver plating also fills a function as a reflecting plate because of its high reflectance, the role of the silver plating is high for providing a high-luminance and long-life LED.

However, since the metals are discolored or blackened by the presence of sulfur and chlorine minutely contained in air to lose their gloss, their reflectances are lowered with time. LED also involves a problem of the blackening of the silver plating making up the electrode to be inhibited. As means for solving this problem, for example, a light emitting diode with a protecting film provided on the surface of an electrode is known (see Japanese Patent Application Laid-Open No. 2007-109915).

On the other hand, an epoxy resin type sealing material is known as a sealing compound for LED. However, this material has involved a problem that the epoxy resin itself is discolored when exposed to a high temperature in the presence of sulfur though it is excellent in sulfur barrier property. A silicone type sealing material is excellent in durability and scarcely discolored, but it is indicated that gas permeability is high (see, for example, Japanese Patent Application Laid-Open No. 2004-2783). Therefore, this sealing material has involved a problem that the silver plating is blackened in the presence of sulfur.

### SUMMARY OF THE INVENTION

It is an object of the present invention to provide a metal-coating material excellent in sulfur barrier property and transparency, a method for protecting a metal making use of this metal-coating material and a light emitting device permitting high luminance and long life.

The present inventors have carried out an extensive investigation with a view toward solving the above-described problems. As a result, it has been found that a coating material containing a polymer obtained from a specific silane compound and a specific silyl group-containing polymer is not colored even under a sulfur atmosphere and excellent in sulfur barrier property, thus leading to completion of the present invention.

According to the present invention, there is thus provided a metal-coating material comprising a polymer (A) obtained by subjecting at least one silane compound (a1) selected from the group consisting of at least one organosilane represented by the following formula (1):

R¹ₙSi(OR²)₄₋ₙ (1)

wherein R¹ means a monovalent organic group having 1 to 8 carbon atoms, with the proviso that when two organic groups are present, the groups may be the same or different from each other, R² denotes, independently of each other, an alkyl group having 1 to 5 carbon atoms or an acyl group having 1 to 6 carbon atoms, and n is an integer of 0 to 2, a hydrolyzate of the organosilane and a condensate of the organosilane, and a polymer (a2) having a silyl group containing a silicon atom bonded to a hydrolyzable group and/or a hydroxyl group to a hydrolyzing and condensation reaction.

In the metal-coating material according to the present invention, the polymer (A) may preferably be obtained by subjecting the silane compound (a1) and the polymer (a2) to the hydrolyzing and condensation reaction at a mass ratio (Wa1/Wa2) ranging from 5/95 to 95/5 (assuming that Wa1 + Wa2 is 100) in terms of a ratio of a content (Wa1) of a completely hydrolyzed and condensed product of the silane compound (a1) to a solid content (Wa2) of the polymer (a2).

In the metal-coating material according to the present invention, the polymer (a2) may preferably be such that the content of the silyl group containing the silicon atom bonded to the hydrolyzable group and/or the hydroxyl group is 0.1 to 2% by mass in terms of a content of the silicon atom.

The metal-coating material according to the present invention may preferably further comprise silica particles.

The metal-coating material according to the present invention may preferably further comprise metal oxide particles, and the metal oxide particles may preferably be composed of at least one selected from the group consisting of titanium oxide, zirconium oxide, aluminum oxide and zinc oxide.

The metal-coating material according to the present invention may preferably be used for silver or a silver electrode.

According to the present invention, there is also provided a method for protecting a metal, comprising coating the surface of the metal with the above-described metal-coating material.

According to the present invention, there is further provided a light emitting device comprising a silver-plated member, silver electrode or sealing material coated with the above-described metal-coating material.

According to the present invention, there is provided a metal-coating material free of coloring of the material itself even when exposed to a sulfur atmosphere and excellent in sulfur barrier property. Discoloration of a metal can be inhibited even when exposed to a sulfur atmosphere by coating the surface of the metal with this metal-coating material, and the high luminance and long life of a light emitting device such as LED can be permitted by coating the surface of a silver-plated member, silver electrode or sealing material in the light emitting device with the metal-coating material.

Further features of the present invention will become apparent from the following description of exemplary embodiments with reference to the attached drawings.

### BRIEF DESCRIPTION OF THE DRAWINGS

FIG. 1 typically illustrates an example in the case where the light emitting device according to the present invention was executed as a light emitting diode.

FIG. 2 typically illustrates another example in the case where the light emitting device according to the present invention was executed as a light emitting diode.

FIG. 3 typically illustrates a further example in the case where the light emitting device according to the present invention was executed as a light emitting diode.

### DESCRIPTION OF THE EMBODIMENTS

### [Polymer (A)]

The metal-coating material according to the present invention comprises a polymer (hereinafter referred to as "organic-inorganic hybrid polymer") (A) obtained by subjecting a specific silane compound (a1) and a specific silyl group-containing polymer (a2) to a hydrolyzing and condensation reaction. More specifically, this organic-inorganic hybrid polymer (A) is prepared by adding a catalyst for accelerating the hydrolyzing and condensation reaction and water to a mixture containing the specific silane compound (a1) and the specific silyl group-containing polymer (a2).

### <Specific silane compound (a1)>

The specific silane compound (a1) used in the present invention is at least one silane compound selected from the group consisting of at least one organosilane (hereinafter also referred to as "organosilane (1)") represented by the following formula (1):

R¹ₙSi(OR²)₄₋ₙ (1) (1)

wherein R¹ means a monovalent organic group having 1 to 8 carbon atoms, with the proviso that when two organic groups are present, the groups may be the same or different from each other, R² denotes, independently of each other, an alkyl group having 1 to 5 carbon atoms or an acyl group having 1 to 6 carbon atoms, and n is an integer of 0 to 2, a hydrolyzate of the organosilane (1) and a condensate of the organosilane (1). Among these three silane compounds, only one silane compound may be used, any two silane compounds may be used in combination, or all the three silane compounds may be used in combination.

When the organosilane (1) is used as the specific silane compound (a1), only one organosilane (1) may be used singly, or two or more organosilanes may be used in combination. The hydrolyzate and condensate of the organosilane (1) may be those formed from one organosilane (1) or those formed from two or more organosilanes (1).

In the hydrolyzate of the organosilane (1), it is only necessary that at least one OR² group among 2 to 4 OR² groups contained in the organosilane (1) is hydrolyzed.
For example, the hydrolyzate may be that obtained by hydrolyzing one OR² group, that obtained by hydrolyzing two or more OR² groups, or a mixture thereof.

The condensate of the organosilane (1) is such that a silanol group in a hydrolyzate formed by hydrolysis of the organosilane (1) is condensed to form a Si-O-Si bond.
In the present invention, it is not necessary to condense all silanol groups, and the condensate includes that obtained by condensing only a slight part of the silanol groups, that obtained by condensing most or all of the silanol groups and a mixture thereof.

In the formula (1), R¹ is a monovalent organic group having 1 to 8 carbon atoms, and specific examples thereof include alkyl groups such as methyl, ethyl, n-propyl, isopropyl, n-butyl, isobutyl, sec-butyl, t-butyl, n-hexyl, n-heptyl, n-octyl and 2-ethylhexyl groups; acyl groups such as acetyl, propionyl, butyryl, valeryl, benzoyl, tolyoyl and caproyl groups; vinyl, allyl, cyclohexyl, phenyl, epoxy, glycidyl, (meth)acryloxy, ureido, amide, fluoroacetamide and isocyanate groups; and substituted derivative of these organic groups.

Specific examples of substituents in the substituted derivatives include halogen atoms, substituted or unsubstituted amino group, hydroxyl group, mercapto group, isocyanate group, glycidoxy group, 3,4-epoxycyclohexyl group, (meth)acryloxy group, ureido group and ammonium salt groups. However, the number of carbon atoms in R¹ composed of such a substituted derivative is 8 or less, inclusive of the number of carbon atoms in the substituent.

When plural R¹ groups are present in the formula (1), the groups may be the same or different from each other.

In the formula (1), R² is an alkyl group having 1 to 5 carbon atoms or an acyl group having 1 to 6 carbon atoms.

As specific examples of the alkyl group having 1 to 5 carbon atoms, may be mentioned methyl, ethyl, n-propyl, isopropyl, n-butyl, sec-butyl, t-butyl and n-pentyl groups. Specific examples of the acyl group having 1 to 6 carbon atoms include acetyl, propionyl, butyryl, valeryl and caproyl groups.

When plural R² groups are present in the formula (1), the groups may be the same or different from each other.

Specific examples of such an organosilane (1) include tetraalkoxysilanes (n = 0 in the formula (1)) such as tetramethoxysilane, tetraethoxysilane, tetra-n-propoxy silane, tetraisopropoxysilane and tetra-n-butoxysilane; trialkoxysilanes (n = 1 in the formula (1)) such as methyltrimethoxysilane, methyltriethoxysilane, ethyltrimethoxysilane, ethyltriethoxysilane, n-propyltrimethoxysilane, n-propyltriethoxysilane, isopropyltrimethoxysilane, isopropyltriethoxysilane, n-butyltrimethoxysilane, n-butyltriethoxysilane, n-pentyltrimethoxysilane, n-hexyltrimethoxysilane, n-heptyltrimethoxysilane, n-octyltrimethoxysilane, vinyltrimethoxysilane, vinyltriethoxysilane, cyclohexyltrimethoxysilane, cyclohexyltriethoxysilane, phenyltrimethoxysilane, phenyltriethoxysilane, 3-chloropropyltrimethoxysilane, 3-chloropropyltriethoxysilane, 3,3,3-trifluoropropyltrimethoxysilane, 3,3,3-trifluoropropyltriethoxysilane, 3-aminopropyltrimethoxysilane, 3-aminopropyltriethoxysilane, 2-hydroxyethyltrimethoxysilane, 2-hydroxyethyltriethoxysilane, 2-hydroxypropyltrimethoxysilane, 2-hydroxypropyltriethoxysilane, 3-hydroxypropyltrimethoxysilane, 3-hydroxypropyltriethoxysilane, 3-mercaptopropyltrimethoxysilane, 3-mercaptopropyltriethoxysilane, 3-isocyanatopropyltrimethoxysilane, 3-isocyanatopropyltriethoxysilane, 3-glycidoxypropyltrimethoxysilane, 3-glycidoxypropyltriethoxysilane, 2-(3,4-epoxycyclohexyl)ethyltrimethoxysilane, 2-(3,4-epoxycyclohexyl)ethyltriethoxysilane, 3-(meth)acryloxypropyltrimethoxysilane, 3-(meth)acryloxypropyltriethoxysilane, 3-ureidopropyltrimethoxysilane and 3-ureidopropyltriethoxysilane; dialkoxysilanes (n = 2 in the formula (1)) such as dimethyldimethoxysilane, dimethyldiethoxysilane, diethyldimethoxysilane, diethyldiethoxysilane, di-n-propyldimethoxysilane, di-n-propyldiethoxysilane, diisopropyldimethoxysilane, diisopropyldiethoxysilane, di-n-butyldimethoxysilane, di-n-butyldiethoxysilane, di-n-pentyldimethoxysilane, di-n-pentyldiethoxysilane, di-n-hexyldimethoxysilane, di-n-hexyldiethoxysilane, di-n-heptyldimethoxysilane, di-n-heptyldiethoxysilane, di-n-octyldimethoxysilane, di-n-octyldiethoxysilane, dicyclohexyldimethoxysilane, dicyclohexyldiethoxylsilane, diphenyldimethoxysilane and diphenyldiethoxysilane; methyltriacetyloxysilane (n = 1 in the formula (1)); and dimethyldiacetyloxysilane (n = 2 in the formula (1)).

Among these, trifunctional silane compounds, in which n in the formula (1) is 1, are preferably mainly used. Such a trifunctional silane compound is preferably used in combination with a bifunctional silane compound, in which n in the formula (1) is 2, from the viewpoint of stability of the resulting organic-inorganic hybrid polymer (A). In particular, the trifunctional silane compound is preferably a trialkoxysilane, and the bifunctional silane compound is preferably a dialkoxysilane.

When the trifunctional silane compound is used in combination with the bifunctional silane compound, a mass ratio of the trifunctional silane compound to the bifunctional silane compound in terms of their completely hydrolyzed and condensed products is preferably 95/5 to 10/90, more preferably 90/10 to 30/70, particularly preferably 85/15 to 40/60. However, the sum total (in terms of the completely hydrolyzed and condensed products) of the trifunctional silane compound and the bifunctional silane compound is regarded as 100. If the content of the trifunctional silane compound is too high, the storage stability of the resulting organic-inorganic hybrid polymer (A) may be lowered in some cases. If the content of the trifunctional silane compound is too low on the other hand, the hardenability and sulfur barrier property of the resulting coating film may be lowered in some cases.

Incidentally, the completely hydrolyzed and condensed product in the present invention means that the OR² groups in the silane compound are hydrolyzed to 100% to form SiOH groups, and the SiOH groups are completely condensed to form a siloxane structure.

In the present invention, one organosilane (1) may be used singly as the specific silane compound (a1), but two or more organosilanes (1) may be used in combination. When the two or more organosilanes (1) used as the specific silane compound (a1) are represented by the formula (1) on the average, averaged n (hereinafter also referred to as "average value of n") is preferably 0.5 to 1.9, more preferably 0.6 to 1.7, particularly preferably 0.7 to 1.5. If this average value of n is less than 0.5, the storage stability of the resulting organic-inorganic hybrid polymer may be lowered in some cases. If the average value of n exceeds 1.9 on the other hand, the hardenability and sulfur barrier property of the resulting coating film may be lowered in some cases.

The average value of n can be adjusted to the above range by suitably using bifunctional to tetrafunctional silane compounds in combination and suitably controlling their mixing proportions.

Incidentally, the same applies in the case where the hydrolyzate or condensate is used as the specific silane compound (a1).

In the present invention, the organosilane (1) may be used as the specific silane compound (a1) as it is, but the hydrolyzate and/or condensate of the organosilane (1) may also be used. When the organosilane (1) is used in the form of the hydrolyzate and/or condensate thereof, that prepared in advance by hydrolyzing and/or condensing the organosilane (1) may be used. However, it is preferable that water is added upon preparation of the organic-inorganic hybrid polymer (A) to hydrolyze the organosilane (1) with water and/or condense it, thereby preparing the hydrolyzate and/or condensate of the organosilane (1).

The condensate of the organosilane (1) has a weight-average molecular weight (hereinafter referred to as "Mw") of preferably 300 to 100,000, more preferably 500 to 50,000 in terms of polystyrene as measured by gel permeation chromatography (GPC).

When the condensate of the organosilane (1) is used as the specific silane compound (a1) in the present invention, the condensate may be prepared from the organosilane (1), or a commercially available organosilane condensate may also be used. Examples of the commercially available organosilane condensate include MKC Silicate (product of Mitsubishi Chemical Corporation), Ethyl Silicate (product of COLCOAT CO., LTD.), Silicone Resin (product of Dow Corning Toray Silicone Co., Ltd.,) Silicone Resin (product of GE Toshiba Silicone Co., Ltd.), Silicone Resin and Silicone Oligomer (products of Shin-Etsu Chemical Co., Ltd.), Hydroxyl group-containing Dimethyl Polysiloxane (product of Dow Corning Asia Co., Ltd.), and Silicone Oligomer (product of Nippon Unicar Co., Ltd.). These commercially available organosilane condensates may be used as they are, or may be further condensed before use.

### <Specific silyl group-containing polymer (a2)>

The specific silyl group-containing polymer (a2) used in the present invention contains a silyl group (hereinafter referred to as "specific silyl group") having a silicon atom bonded to a hydrolyzable group and/or a hydroxyl group. This specific silyl group-containing polymer (a2) preferably has the specific silyl group at a terminal and/or side chain of a molecular chain of the polymer.

The hydrolyzable group and/or the hydroxyl group in this specific silyl group co-condenses with the above-described specific silane compound (a1), thereby forming the organic-inorganic hybrid polymer (A). It is inferred that the surface of a silver plating is coated with this organic-inorganic hybrid polymer (A), whereby the organic-inorganic hybrid polymer (A) firmly bonds to the surface through a siloxane bond, and the hydrolyzable group and/or the hydroxyl group in the specific silyl group remaining in the organic-inorganic hybrid polymer (A) is further adsorbed on the surface of silver, thereby developing sulfur barrier property and protecting the surface of silver.

The content of the specific silyl group in the specific silyl group-containing polymer (a2) is generally 0.1 to 2% by mass, preferably 0.3 to 1.7% by mass, in terms of the content of a silicon atom, based on a polymer prior to introduction of the specific silyl group. If the content of the specific silyl group in the specific silyl group-containing polymer is too low, the amount of the specific silyl group remaining in a covalent bond site with the specific silane compound (a1) and the organic-inorganic hybrid polymer (A) becomes small, so that the effect to protect the metal surface may not be achieved in some cases. If the content of the specific silyl group in the specific silyl group-containing polymer is too high on the other hand, gelling may occur during storage in some cases.

The specific silyl group is preferably a group represented by the following formula (3):

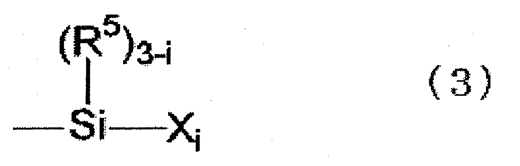

wherein X means a hydrolyzable group such as a halogen atom, or alkoxyl, acetoxy, phenoxy, thioalkoxyl or amino group, or a hydroxyl group, R⁵ denotes a hydrogen atom, an alkyl group having 1 to 10 carbon atoms or an aralkyl group having 1 to 10 carbon atoms, and i is an integer of 1 to 3.

Such a specific silyl group-containing polymer (a2) can be prepared in accordance with the following process (I) or (II):

(I) A process, in which a hydrosilane compound (hereinafter also referred to as "hydrosilane compound (I)" merely) having a specific silyl group represented by the formula (3) is subjected to an addition reaction with a carbon-carbon double bond in a vinyl polymer (hereinafter referred to as "unsaturated vinyl polymer") having the carbon-carbon double bond; or
(II) A process, in which a silane compound (hereinafter referred to as "unsaturated silane compound (II)") represented by the following formula (4):

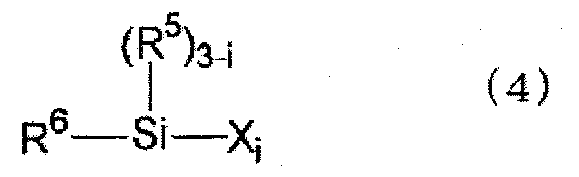

wherein X, R⁵ and i have the same meaning as X, R⁵ and i in the formula (3), respectively, and R⁶ denotes an organic group having a polymerizable double bond, is copolymerized with another vinyl monomer.

As specific examples of the hydrosilane compound (I) used in the process (I), may be mentioned halogenated silanes such as methyldichlorosilane, trichlorosilane and phenyldichlorosilane; alkoxysilanes such as methyldimethoxysilane, methyldiethoxysilane, phenyldimethoxysilane, trimethoxysilane and triethoxysilane; acyloxysilanes such as methyldiacetoxysilane, phenyldiacetoxysilane and triacetoxysilane; aminoxysilanes such as methyldiaminoxysilane, triaminoxysilane and dimethylaminoxysilane. These hydrosilane compounds (I) may be used either singly or in any combination thereof.

No particular limitation is imposed on the unsaturated vinyl polymer used in the process (I) so far as it is a vinyl polymer having no hydroxyl group. Such an unsaturated vinyl polymer can be produced in accordance with, for example, the following process (I-1) or (I-2) or a combination thereof.

(I-1) A process, in which a vinyl monomer having a functional group (hereinafter referred to as "functional group (α)") is (co)polymerized, and an unsaturated compound having a functional group (hereinafter referred to as "functional group (β)") capable of reacting with the functional group (α) and a carbon-carbon double bond is then reacted to the functional group (α) in the resultant (co)polymer, thereby producing an unsaturated vinyl polymer having a carbon-carbon double bound in a side chain of a molecular chain of the polymer; or
(I-2) A process, in which a radical polymerization initiator (for example, 4,4'-azobis-4-cyanovaleric acid) having a functional group (α) is used, or compounds (for example, 4,4'-azobis-4-cyanovaleric acid and dithioglycolic acid) both having a functional group (α) are used as a radical polymerization initiator and a chain-transfer agent to (co)polymerize a vinyl monomer, thereby synthesizing a (co)polymer having the functional group (α) derived from the radical polymerization initiator and/or the chain-transfer agent at one terminal or both terminals of the molecular chain of the polymer, and an unsaturated compound having a functional group (β) and a carbon-carbon double bond is then reacted to the functional group(s) (α) in the resultant (co)polymer, thereby producing an unsaturated vinyl polymer having carbon-carbon double bound(s) at one terminal or both terminals of the molecular chain of the polymer.

As examples of the reaction of the functional group (α) with the functional group (β) in the above-described processes (I-1) and (I-2), may be mentioned an esterification reaction between a carboxyl group and a hydroxyl group, a ring-opening esterification reaction between a carboxylic anhydride group and a hydroxyl group, a ring-opening esterification reaction between a carboxyl group and an epoxy group, an amidation reaction between a carboxyl group and an amino group, a ring-opening amidation reaction between a carboxylic anhydride group and an amino group, a ring-opening addition reaction between an epoxy group and an amino group, an urethanation reaction between a hydroxyl group and an isocyanate group, and combinations thereof.

As specific examples of the vinyl monomer having the functional group (α), may be mentioned unsaturated carboxylic acids such as (meth)acrylic acid, crotonic acid, maleic acid, fumaric acid and itaconic acid; unsaturated carboxylic anhydrides such as maleic anhydride and itaconic anhydride; hydroxyl group-containing vinyl monomers such as 2-hydroxyethyl (meth)acrylate, 2-hydroxypropyl (meth)-acrylate, 3-hydroxypropyl (meth)acrylate, N-methylol (meth)acrylamide and 2-hydroxyethyl vinyl ether; amino group-containing vinyl monomers such as 2-aminoethyl (meth)acrylate, 2-aminopropyl (meth)acrylate, 3-aminopropyl (meth)acrylate and 2-aminoethyl vinyl ether; amineimide group-containing vinyl monomers such as 1,1,1-trimethylamine (meth)acrylimide, 1-methyl-1-ethylamine (meth)acrylimide, 1,1-dimethyl-1-(2-hydroxypropyl)amine (meth)acrylimide, 1,1-dimethyl-1-(2'-phenyl-2'-hydroxethyl)amine (meth)acrylimide and 1,1-dimethyl-1-(2'-hydroxy-2'-phenoxypropyl)amine (meth)acrylimide; and epoxy group-containing vinyl monomers such as glycidyl (meth)acrylate and allyl glycidyl ether. These vinyl monomers having the functional group (α) may be used either singly or in any combination thereof.

Specific example of another vinyl monomer copolymerizable with the vinyl monomer having the functional group (α) include aromatic vinyl monomers such as styrene, α-methylstyrene, 4-methylstyrene, 2-methylstyrene, 3-methylstyrene, 4-methoxystyrene, 2-hydroxymethylstyrene, 4-ethylstyrene, 4-ethoxystyrene, 3,4-dimethylstyrene, 3,4-diethylstyrene, 2-chlorostyrene, 3-chlorostyrene, 4-chloro-3-methylstyrene, 4-t-butylstyrene, 2,4-dichloro-styrene, 2,6-dichlorostyrene and 1-vinylnaphthalene; (meth)acrylate compounds such as methyl (meth)acrylate, ethyl (meth)acrylate, propyl (meth)acrylate, n-butyl (meth)acrylate, isobutyl (meth)acrylate, amyl (meth)acrylate, isoamyl (meth)acrylate, hexyl (meth)acrylate, 2-ethylhexyl (meth)acrylate, n-octyl (meth)acrylate and cyclohexyl (meth)acrylate; polyfunctional monomers such as divinylbenzene, ethylene glycol di(meth)acrylate, diethylene glycol di(meth)acrylate, triethylene glycol di(meth)acrylate, tetraethylene glycol di(meth)acrylate, propylene glycol di(meth)acrylate, dipropylene glycol di(meth)acrylate, tripropylene glycol di(meth)acrylate, tetrapropylene glycol di(meth)acrylate, butanediol di(meth)acrylate, hexanediol di(meth)acrylate, trimethylolpropane tri(meth)acrylate and pentaerythritol tetra(meth)acrylate; acid amide compounds such as (meth)acrylamide, N-methylol(meth)acrylamide, N-methoxymethyl(meth)acrylamide, N-butoxymethyl(meth)acrylamide, N,N'-methylenebisacrylamide, diacetone acrylamide, maleic acid amide and maleimide; vinyl compounds such as vinyl chloride, vinylidene chloride and fatty acid vinyl esters; aliphatic conjugated dienes such as 1,3-butadiene, 2-methyl-1,3-butadiene, 2,3-dimethyl-1,3-butadiene, 2-neopentyl-1,3-butadiene, 2-chloro-1,3-butadiene, 2-cyano-1,3-butadiene, isoprene, substituted linear conjugated pentadienes substituted by a substituent such as an alkyl group, halogen atom or cyano group and linear and branched conjugated hexadienes; vinyl cyanide compounds such as acrylonitrile and methacrylonitrile; fluorine atom-containing monomers such as trifluoroethyl (meth)acrylate and pentafluorooctyl (meth)acrylate; piperidine monomers such as 4-(meth)acryloyloxy-2,2,6,6-tetramethylpiperidine, 4-(meth)acryloylamino-2,2,6,6-tetramethylpiperidine and 4-(meth)acryloyloxy-1,2,2,6,6-pentamethylpiperidine; ultraviolet ray-absorbing monomers such as 2-(2'-hydroxy-5'-methacryloxyethylphenyl)-2H-benzotriazole, 2-(2'-hydroxy-3'-t-butyl-5'-methacryloxyethylphenyl)-2H-benzotriazole, 2-hydroxy-4-(methacryloyloxyethyl)-benzophenone and 2-hydroxy-4-(acryloyloxyethoxy)- benzophenone; and dicaprolactone. These compounds may be used either singly or in any combination thereof.

As specific examples of the unsaturated compound having the functional group (β) and the carbon-carbon double bond, may be mentioned isocyanate group-containing unsaturated compounds obtained by reacting a functional monomer with a diisocyanate compound at an equimolar ratio.

The specific silyl group-containing polymer (a2) for the organic-inorganic hybrid polymer (A) according to the present invention preferably has the specific silyl group and contains a structural unit derived from methyl(meth)acrylate in an amount of 50-99% by mass.

As examples of the unsaturated silane compound (II) used in the process (II), may be mentioned CH₂=CHSi(CH₃) (OCH₃)₂, CH₂=CHSi(OCH₃)₃, CH₂=CHSi(CH₃)Cl₂, CH₂=CHSiCl₃, CH₂=CHCOO(CH₂)₂Si(CH₃) (OCH₃)₂, CH₂=CHCOO(CH₂)₂Si(OCH₃)₃, CH₂=CHCOO(CH₂)₃Si(CH₃) (OCH₃)₂, CH₂=CHCOO(CH₂)₃Si(OCH₃)₃, CH₂=CHCOO(CH₂)₂Si(CH₃)Cl₂CH₃ CH₂=CHCOO(CH₂)₂SiCl₃, CH₂=CHCOO(CH₂)₃Si(CH₃)Cl₂, CH₂=CHCOO(CH₂)₃SiCl₃, CH₂=C(CH₃)COO(CH₂)₂Si(CH₃) (OCH₃)₂, CH₂=C(CH₃)COO(CH₂)₂Si(OCH₃)₃, CH₂=C(CH₃)COO(CH₂)₃Si(CH₃) (OCH₃)₂, CH₂=C(CH₃)COO(CH₂)₃Si(OCH₃)₃, CH₂=C(CH₃)COO(CH₂)₂Si(CH₃)Cl₂, CH₂=C(CH₃)COO(CH₂)₂SiCl₃, CH₂=C(CH₃)COO(CH₂)₃Si(CH₃)Cl₂, CH₂=C(CH₃)COO(CH₂)₃SiCl₃,

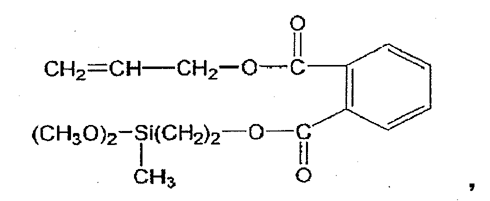

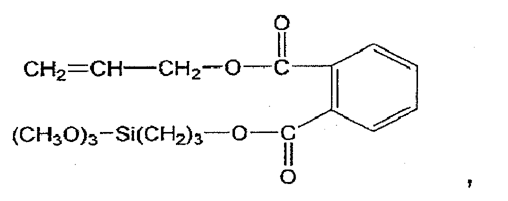

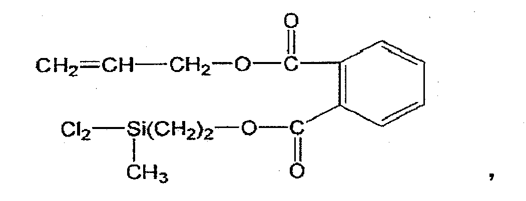

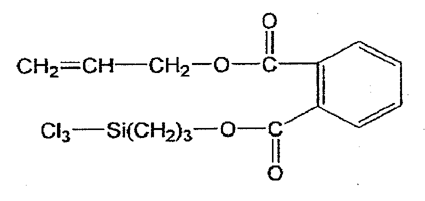

These compounds may be used either singly or in any combination thereof. As specific examples of another vinyl monomer copolymerized with the unsaturated silane compound, may be mentioned the vinyl monomers having the functional group (α) exemplified in the process (I) and the other vinyl monomers.

As the production process of the specific silyl group-containing polymer (a2), may be used, for example, a process, in which the respective monomers are added collectively to conduct polymerization, a process, in which part of the monomers are polymerized, and the remainder is added continuously or intermittently to conduct polymerization, or a process, in which the monomers are continuously added from the beginning of polymerization. These processes may be combined.

A preferable polymerization process includes solution polymerization. No particular limitation is imposed on a solvent used in the solution polymerization so far as the specific silyl group-containing polymer (a2) is obtained by synthesis. However, for example, an alcohol, aromatic hydrocarbon, ether, ketone or ester may be used.

Specific examples of the alcohol include methanol, ethanol, n-propyl alcohol, isopropyl alcohol, n-butyl alcohol, sec-butyl alcohol, t-butyl alcohol, n-hexyl alcohol, n-octyl alcohol, ethylene glycol, diethylene glycol, triethylene glycol, ethylene glycol monobutyl ether, ethylene glycol monoethyl ether acetate, diethylene glycol monoethyl ether, propylene glycol monomethyl ether, propylene monomethyl ether acetate and diacetone alcohol. Specific examples of the aromatic hydrocarbon include benzene, toluene and xylene.

Specific examples of the ether include tetrahydrofuran and dioxane. Specific examples of the ketone include acetone, methyl-ethyl ketone, methyl-isobutyl ketone and diisobuthyl ketone.

Specific examples of the ester include ethyl acetate, propyl acetate, butyl acetate, propyl carbonate, methyl lactate, ethyl lactate, n-propyl lactate, isopropyl lactate, methyl 3-ethoxypropionate and ethyl 3-ethoxypropionate. These solvents may be used either singly or in any combination thereof.

Publicly known polymerization initiator, molecular weight modifier, chelating agent and inorganic electrolyte may be used in the above polymerization.

In the present invention, another specific silyl group-containing polymer such as a specific silyl group-containing epoxy resin or specific silyl group-containing polyester resin may also be used as the specific silyl group-containing polymer (a2) other than the polymer polymerized in the above-described manner. The specific silyl group-containing epoxy resin can be produced by, for example, reacting an aminosilane, vinylsilane, carboxysilane or glycidylsilane having a specific silyl group to the epoxy group in an epoxy resin such as a bisphenol A type epoxy resin, bisphenol F type epoxy resin, hydrogenated bisphenol A type epoxy resin, aliphatic polyglycidyl ether or aliphatic polyglycidyl ester.

The specific silyl group-containing polyester resin can be produced by, for example, reacting an aminosilane, carboxysilane or glycidylsilane having a specific silyl group to the carboxyl group or hydroxyl group contained in a polyester resin.

Mw, in terms of polystyrene, of the specific silyl group-containing polymer (a2) as measured by GPC is preferably 2,000 to 100,000, more preferably 3,000 to 50,000.

The specific silyl group-containing polymers (a2) may be either singly or in any combination thereof.

### <Catalyst>

In the present invention, a catalyst is preferably added to a mixture of the specific silane compound (a1) and the specific silyl group-containing polymer (a2) for accelerating the hydrolyzing and condensation reaction of the specific silane compound (a1) and the specific silyl group-containing polymer (a2). By the addition of the catalyst, the crosslinking degree of the resulting organic-inorganic hybrid polymer (A) can be enhanced, and moreover the molecular weight of polysiloxane formed by the polycondensation reaction of the organosilane (1) is increased. As a result, a hardened product excellent in, for example, strength and long-term durability can be obtained, and higher sulfur barrier property can be achieved when the surface of silver is coated with the resulting coating material.

In addition, the addition of the catalyst accelerates the reaction between the specific silane compound (a1) and the specific silyl group-containing polymer (a2) to form sufficient reaction sites (alkoxy groups) in the resulting organic-inorganic hybrid polymer (A). It is inferred that when a silver plating is coated with this organic-inorganic hybrid polymer (A), and the coating layer is hardened, a siloxane bond is formed to form a metal-coating layer having a high crosslinking density, thereby developing sulfur barrier property and moreover protecting the silver surface from discoloration by being adsorbed on the silver surface.

As the catalyst for accelerating such a hydrolyzing and condensation reaction, may be used, for example, a basic compound, acidic compound, salt compound or metal chelate compound.

### <Basic compound>

As the basic compound, may be used ammonia (including aqueous ammonia), an organic amine compound, a hydroxide of an alkali metal or alkaline earth metal, such as sodium hydroxide or potassium hydroxide, or an alkali metal alkoxide such as sodium methoxide or sodium ethoxide. Among these, ammonia and the organic amine compound are preferred. As the organic amine, may be used an alkylamine, alkoxyamine, alkanolamine or arylamine.

Specific examples of the alkylamine include alkylamines having alkyl group(s) having 1 to 4 carbon atoms, such as methylamine, ethylamine, propylamine, butylamine, hexylamine, octylamine, N,N-dimethylamine, N,N-diethylamine, N,N-dipropylamine, N,N-dibutylamine, trimethylamine, triethylamine, tripropylamine and tributylamine.

Specific example of the alkoxyamine include alkoxyamines having alkoxyl group(s) having 1 to 4 carbon atoms, such as methoxymethylamine, methoxyethylamine, methoxypropylamine, methoxybutylamine, ethoxymethylamine, ethoxyethylamine, ethoxypropylamine, ethoxybutylamine, propoxymethylamine, propoxyethylamine, propoxypropylamine, propoxybutylamine, butoxymethylamine, butoxyethylamine, butoxypropylamine and butoxybutylamine.

Specific examples of the alkanolamine include alkanolamines having alkyl group(s) having 1 to 4 carbon atoms, such as methanolamine, ethanolamine, propanolamine, butanolamine, N-methylmethanolamine, N-ethylmethanolamine, N-propylmethanolamine, N-butylmethanolamine, N-methylethanolamine, N-ethylethanolamine, N-propylethanolamine, N-butylethanolamine, N-methylpropanolamine, N-ethylpropanolamine, N-propylpropanolamine, N-butylpropanolamine, N-methylbutanolamine, N-ethylbutanolamine, N-propylbutanolamine, N-butylbutanolamine, N,N-dimethylmethanolamine, N,N-diethylmethanolamine, N,N-dipropylmethanolamine, N,N-dibutylmethanolamine, N,N-dimethylethanolamine, N,N-diethylethanolamine, N,N-dipropylethanolamine, N,N-dibutylethanolamine, N,N-dimethylpropanolamine, N,N-diethylpropanolamine, N,N-dipropylpropanolamine, N,N-dibutylpropanolamine, N,N-dimethylbutanolamine, N,N-diethylbutanolamine, N,N-dipropylbutanolamine, N,N-dibutylbutanolamine, N-methyldimethanolamine, N-ethyldimethanolamine, N-propyldimethanolamine, N-butyldimethanolamine, N-methyldiethanolamine, N-ethyldiethanolamine, N-propyldiethanolamine, N-butyldiethanolamine, N-methyldipropanolamine, N-ethyldipropanolamine, N-propyldipropanolamine, N-butyldipropanolamine, N-methyldibutanolamine, N-ethyldibutanolamine, N-propyldibutanolamine, N-butyldibutanolamine, N-(aminomethyl)methanolamine, N-(aminomethyl)ethanolamine, N-(aminomethyl)propanolamine, N-(aminomethyl)butanolamine, N-(aminoethyl)methanolamine, N-(aminoethyl)ethanolamine, N-(aminoethyl)propanolamine, N-(aminoethyl)butanolamine, N-(aminopropyl)methanolamine, N-(aminopropyl)ethanolamine, N-(aminopropyl)propanolamine, N-(aminopropyl)butanolamine, N-(aminobutyl)methanolamine, N-(aminobutyl)ethanolamine, N-(aminobutyl)propanolamine and N-(aminobutyl)butanolamine.

Specific examples of the arylamine include aniline and N-methylaniline.

In addition, as organic amines other than the above-described amines, may also be used tetraalkylammonium hydroxides such as tetramethylammonium hydroxide, tetraethylammonium hydroxide, tetrapropylammonium hydroxide and tetrabutylammonium hydroxide; tetraalkylethylenediamines such as tetramethylethylenediamine, tetraethylethylenediamine, tetrapropylethylenediamine and tetrabutylethylenediamine; alkylaminoalkylamines such as methylaminomethylamine, methylaminoethylamine, methylaminopropylamine, methylaminobutylamine, ethylaminomethylamine, ethylaminoethylamine, ethylaminopropylamine, ethylaminobutylamine, propylaminomethylamine, propylaminoethylamine, propylaminopropylamine, propylaminobutylamine, butylaminomethylamine, butylaminoethylamine, butylaminopropylamine and butylaminobutylamine; polyamines such as ethylenediamine, hexamethylenediamine, diethylenetriamine, triethylenetetramine, tetraethylenepentamine, m-phenylenediamine and p-phenylenediamine; and pyridine, pyrrole, piperazine, pyrrolidine, piperidine, picoline, morpholine, methylmorpholine, diazabicyclooctene, diazabicyclononane and diazabicycloundecene.

Such basic compounds may be used either singly or in any combination thereof. Among these, triethylamine, tetramethylammonium hydroxide and pyridine are particularly preferred.

### <Acidic compound>

As the acidic compound, may be used an organic acid or inorganic acid. Specific examples of the organic acid include acetic acid, propionic acid, butanoic acid, pentanoic acid, hexanoic acid, heptanoic acid, octanoic acid, nonanoic acid, decanoic acid, oxalic acid, maleic acid, maleic anhydride, methylmalonic acid, adipic acid, sebacic acid, gallic acid, butyric acid, mellitic acid, arachidonic acid, shikimic acid, 2-ethylhexanoic acid, oleic acid, stearic acid, linolic acid, linolenic acid, salicylic acid, benzoic acid, p-aminobenzoic acid, p-toluenesulfonic acid, benzenesulfinic acid, monochloroacetic acid, dichloroacetic acid, trichloroacetic acid, trifluoroacetic acid, formic acid, malonic acid, methanesulfonic acid, phthalic acid, fumaric acid, citric acid and tartaric acid.

Specific examples of the inorganic acid include hydrochloric acid, nitric acid, sulfuric acid, hydrofluoric acid and phosphoric acid.

Such acidic compounds may be used either singly or in any combination thereof. Among these, maleic acid, maleic anhydride, methanesulfonic acid and acetic acid are particularly preferred.

### <Salt compound>

Specific examples of the salt compound include alkali metal salts of naphthenic acid, octylic acid, nitrous acid, sulfurous acid, aluminic acid and carbonic acid.

### <Metal chelate compound>

As the metal chelate compound, may be used an organometallic compound and/or a partially hydrolyzed product thereof (hereinafter, the organometallic compound and/or the partially hydrolyzed product thereof is referred to as "organometallic compound" collectively).

As the organometallic compound, may be used, for example, a compound (hereinafter referred to as "organometallic compound (b)") represented by the following formula (b):

M(OR⁷)ᵣ(R⁸COCHCOR⁹)ₛ (b)

wherein M means at least one metal atom selected from the group consisting of zirconium, titanium and aluminum, R⁷ and R⁸ denote, independently of each other, a monovalent hydrocarbon group having 1 to 6 carbon atoms, such as a methyl, ethyl, n-propyl, isopropyl, n-butyl, sec-butyl, t-butyl, n-pentyl, n-hexyl, cyclohexyl or phenyl group, R⁹ represents a monovalent hydrocarbon group having 1 to 6 carbon atoms as like in the above, or an alkoxyl group having 1 to 16 carbon atoms, such as a methoxy, ethoxy, n-propoxy, isopropoxy, n-butoxy, sec-butoxy, t-butoxy, lauryloxy or stearyloxy group, and r and s are, independently of each other, an integer of 0 to 4 and satisfy the relationship of (r + s) = (the valence of M), an organometallic compound (hereinafter referred to as "organotin compound") of tetravalent tin with one or two alkyl groups having 1 to 10 carbon atoms bonded to a tin atom, or a partially hydrolyzed product thereof.

As the organometallic compound, may also be used a titanium alcoholate of a tetraalkoxytitanium such as tetramethoxytitanium, tetraethoxytitanium, tetraisopropoxytitanium or tetra-n-butoxytitanium; a trialkoxysilane such as methyltrimethoxysilane, ethyltriethoxysilane, n-propyltrimethoxysilane, isopropyltriethoxysilane, n-hexyltrimethoxysilane, cyclohexyltriethoxysilane, phenyltrimethoxysilane, 3-chloropropyltriethoxysilane, 3-aminopropyltrimethoxysilane, 3-aminopropyltriethoxysilane, 3-(2-aminoethyl)aminopropyltrimethoxysilane, 3-(2-aminoethyl)aminopropyltriethoxysilane, 3-(2-aminoethyl)aminopropylmethyldimethoxysilane, 3-anilinopropyltrimethoxysilane, 3-mercaptopropyltriethoxysilane, 3-isocyanatopropyltrimethoxysilane, 3-glycidoxypropyltriethoxysilane or 3-ureidopropyltrimethoxysilane; or a dialkoxysilane such as dimethyldiethoxysilane, diethyldiethoxysilane, di-n-propyldimethoxysilane, diisopropyldiethoxysilane, di-n-pentyldimethoxysilane, di-n-octyldiethoxysilane, dicyclohexyldimethoxysilane or diphenyldimethoxysilane, or a condensate thereof.

Specific examples of the organometallic compound (b) include organozirconium compounds such as tetra-n-butoxyzirconium, zirconium tri-n-butoxy·ethyl acetoacetate, zirconium di-n-butoxy·bis(ethyl acetate), zirconium n-butoxy·tris(ethyl acetoacetate), zirconium tetrakis(n-propyl acetoacetate), zirconium tetrakis(acetyl acetoacetate), zirconium tetrakis(ethyl acetoacetate) and di-n-butoxy·bis(acetylacetonato)zirconium; organotitanium compounds such as tetraisopropoxytitanium, titanium diisopropoxy·bis(ethyl acetoacetate), titanium diisopropoxy·bis(acetyl acetate) and titanium diisopropoxy·bis(acetylacetone); and organoaluminum compounds such as triisopropoxyaluminum, aluminum diisopropoxy·ethyl acetoacetate, diisopropoxy· acetylacetonatoaluminum, aluminum isopropoxy·bis(ethyl acetoacetate), isopropoxy·bis(acetylacetonato)aluminum, aluminum tris(ethyl acetoacetate), tris(acetylacetonato)-aluminum and aluminum monoacetylacetonato·bis(ethyl acetoacetate).

Specific examples of the organotin compound include carboxylic acid type organotin compounds such as (C₄H₉)₂Sn(OCOC₁₁H₂₃)₂, (C₄H₉)₂Sn(OCOCH=CHCOOCH₃)₂, (C₄H₉)₂Sn(OCOCH=CHCOOC₄H₉)₂, (C₈H₁₇)₂Sn(OCOC₈H₁₇)₂, (C₈H₁₇)₂Sn(OCOC₁₁H₂₃)₂, (C₈H₁₇)₂Sn(OCOCH=CHCOOCH₃)₂, (C₈H₁₇)₂Sn(OCOCH-CHCOOC₄H₉)₂, (C₈H₁₇)₂Sn(OCOCH=CHCOOC₈H₁₇)₂, (C₈H₁₇)₂Sn(OCOCH=CHCOOC₁₆H₃₃)₂, (C₈H₁₇)₂Sn(OCOCH=CHCOOC₁₇H₃₅)₂, (C₈H₁₇)₂Sn(OCOCH=CHCOOC₁₈H₃₇)₂, (C₈H₁₇)₂Sn(OCOCH=CHCOOC₂₀H₄₁)₂, 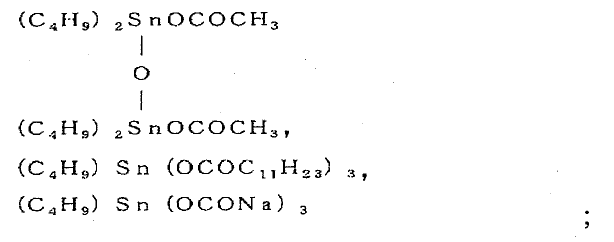 mercaptide type organotin compounds such as 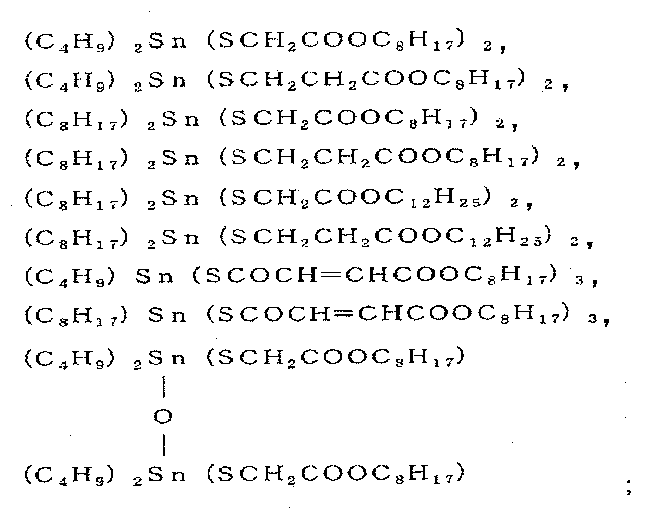 sulfide type organotin compounds such as 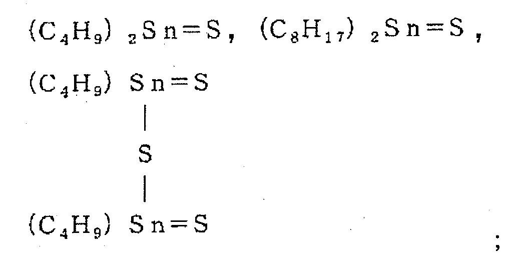 chloride type organotin compounds such as 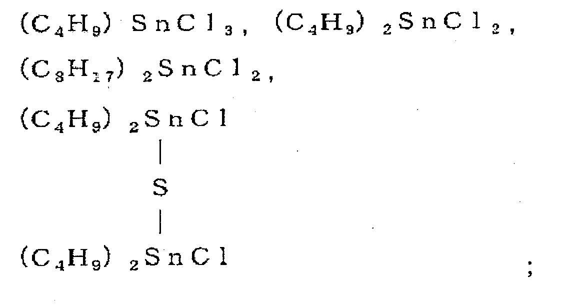 and organic tin oxides such as (C₄H₉)₂SnO and (C₈H₁₇)₂SnO, and reaction products of these organic tin oxides with an ester compound such as silicate, dimethyl maleate, diethylmaleate or dioctyl phthalate.

Such metal chelate compounds may be used either singly or in any combination thereof. Among these, di-n-butoxy·bis(acetylacetonato)zirconium, diisopropoxy· bis(acetylacetonato)titanium, aluminum diisopropoxy· ethyl acetoacetate, aluminum tris(ethyl acetoacetate), or partially hydrolyzed products thereof. The catalyst may also be used in combination with a zinc compound or another reaction retarder.

The amount of the catalyst used is generally 0.001 to 100 parts by mass, preferably 0.01 to 80 parts by mass, more preferably 0.1 to 50 parts by mass per 100 parts by mass (in terms of a completely hydrolyzed and condensed product of the organosilane (1)) of the specific silane compound (a1) when the catalyst is any other catalyst than the organometallic compounds. When the catalyst is the organometallic compound, the amount is generally 100 parts by mass or less, preferably 0.1 to 80 parts by mass, more preferably 0.5 to 50 parts by mass per 100 parts by mass (in terms of a completely hydrolyzed and condensed product of the organosilane (1)) of the specific silane compound (a1).

If the amount of the catalyst used is too great, in some cases, the storage stability of the resulting organic-inorganic hybrid polymer (A) may be lowered to cause gelling, or the crosslinking degree of the resulting metal-coating layer may become too high to cause cracks.

### <Water>

In the present invention, it is preferable that water is added to a mixture of the specific silane compound (a1) and the specific silyl group-containing polymer (a2), whereby the specific silane compound (a1) and the specific silyl group-containing polymer (a2) are co-condensed to prepare the organic-inorganic hybrid polymer (A).

The amount of water added at this time is generally 0.1 to 1.0 mol, preferably 0.2 to 0.8 mol, more preferably 0.25 to 0.6 mol per mol of the OR² group in the specific silane compound (a1). When the amount of water added falls within the above range, gelling is hard to occur, so that good storage stability is achieved. When the amount of water added falls within the above range, a sufficiently crosslinked metal-coating material is provided, and the metal-coating material containing such an organic-inorganic hybrid polymer (A) is used, whereby a metal-coating layer excellent in sulfur barrier property and metal surface-protecting ability can be obtained. <Organic solvent>

In the present invention, the specific silane compound (a1) and the specific silyl group-containing polymer (a2) may be subjected to a hydrolyzing and condensation reaction in an organic solvent. At this time, the organic solvent used upon the preparation of the specific silyl group-containing polymer (a2) may also be used as it is. An organic solvent may also be added as needed for controlling a solid content concentration upon the preparation of the metal-coating material. Further, the organic solvent used upon the preparation of the specific silyl group-containing polymer (a2) may also be removed to newly add an organic solvent.

The organic solvent may be added in such an amount that the solid content concentration upon the preparation of the organic-inorganic hybrid polymer (A) falls within a range of preferably 10 to 60% by mass, more preferably 15 to 50% by mass, particularly preferably 20 to 40% by mass. Incidentally, when the solid content concentration upon the preparation of the organic-inorganic hybrid polymer (A) falls within the above range when the organic solvent used upon the preparation of the specific silyl group-containing polymer (a2) is used as it is, any other organic solvent may be added or not added.

The reactivity between the specific silane compound (a1) and the specific silyl group-containing polymer (a2) can be controlled by adjusting the solid content concentration upon the preparation of the organic-inorganic hybrid polymer (A). If the solid content concentration upon the preparation of the organic-inorganic hybrid polymer (A) is too low, the reactivity between the specific silane compound (a1) and the specific silyl group-containing polymer (a2) may be lowered in some cases. If the solid content concentration upon the preparation of the organic-inorganic hybrid polymer (A) is too high on the other hand, gelling may occur in some cases. Here, the solid content amount in the solid content concentration is a sum total of the amount (Wa1), in terms of a completely hydrolyzed and condensed product of the specific silane compound (a1) used and the amount (Wa2), in terms of a solid content, of the specific silyl group-containing polymer (a2) used.

No particular limitation is imposed on the organic solvent so far as the above components can be uniformly mixed. However, any of the alcohols, aromatic hydrocarbons, ethers, ketones and esters exemplified as the organic solvent used in the production of the specific silyl group-containing polymer (a2) may be used. These organic solvent may be used either singly or in any combination thereof.

### <Stability improver>

In the present invention, a stability improver is preferably added as needed after the preparation of the organic-inorganic hybrid polymer (A) for the purpose of improving the storage stability of the organic-inorganic hybrid polymer (A). As the stability improver, may be used at least one compound selected from the group consisting of a β-diketone represented by the following formula (6):

R¹⁰COCH₂COR¹¹ (6)

wherein R¹⁰ means a monovalent hydrocarbon group having 1 to 6 carbon atoms, such as a methyl, ethyl, n-propyl, isopropyl, n-butyl, sec-butyl, t-butyl, n-pentyl, n-hexyl, cyclohexyl or phenyl group, and R¹¹ denotes a monovalent hydrocarbon group having 1 to 6 carbon atoms, or an alkoxyl group having 1 to 16 carbon atoms, such as a methoxy, ethoxy, n-propoxy, isopropoxy, n-butoxy, sec-butoxy, t-butoxy, lauryloxy or stearyloxy group, a β-ketoester, a carboxylic acid compound, a dihydroxy compound, an amine compound, and an oxyaldehyde compound.

When the organometallic compound is used as the catalyst, the stability improver represented by the formula (6) is preferably added. It is considered that this stability improver is used, whereby the stability improver is coordinated with the metal atom of the organometallic compound, and an excessive co-condensation reaction between the specific silane compound (a1) and the specific silyl group-containing polymer (a2) is inhibited by this coordination, so that the storage stability of the resulting organic-inorganic hybrid polymer (A) can be more improved.

Specific examples of such a stability improver include acetylacetone, methyl acetoacetate, ethyl acetoacetate, n-propyl acetoacetate, isopropyl acetoacetate, n-butyl acetoacetate, sec-butyl acetoacetate, t-butyl acetoacetate, hexane-2,4-dione, heptane-2,4-dione, heptane-3,5-dione, octane-2,4-dione, nonane-2,4-dione, 5-methylhexane-2,4-dione, malonic acid, oxalic acid, phthalic acid, glycolic acid, salicylic acid, aminoacetic acid, iminoacetic acid, ethylenediaminetetraacetic acid, glycol, catechol, ethylenediamine, 2,2-bipyridine, 1,10-phenanthroline, diethylenetriamine, 2-ethanolamine, dimethylglyoxime, dithizone, methionine and salicylaldehyde. Among these, acetylacetone and ethyl acetoacetate are preferred. The stability improvers may be used either singly or in any combination thereof.

The amount of the stability improver used in the present invention is desirably generally at least 2 mol, preferably 3 to 20 mol per mol of the organometallic compound in the organometallic compounds. If the amount of the stability improver is too small, the effect to improve the storage stability of the resulting organic-inorganic hybrid polymer (A) may become insufficient in some cases. <Preparation process of organic-inorganic hybrid polymer (A)>

The organic-inorganic hybrid polymer (A) according to the present invention can be prepared by co-condensing the specific silane compound (a1) and the specific silyl group-containing polymer (a2). Particularly preferably, the hybrid polymer can be prepared by adding a catalyst for hydrolyzing and condensation reaction and water to a mixture of the specific silane compound (a1) and the specific silyl group-containing polymer (a2) to conduct co-condensation.

At this time, a mass ratio (Wa1/Wa2) of the content (Wa1) of the specific silane compound (a1) to the content (Wa2) of the specific silyl group-containing polymer (a2) is 5/95 to 95/5, preferably 15/85 to 85/15, particularly preferably 10/90 to 50/50 (assuming that Wa1 + Wa2 is 100). Incidentally, Wa1 is a value converted to a completely hydrolyzed and condensed product of the specific silane compound (a1), and Wa2 is a value converted to a solid content of the specific silyl group-containing polymer (a2). When this mass ratio (Wa1/Wa2) falls within the above range, a film excellent in transparency and weather resistance can be provided.

Specifically, the organic-inorganic hybrid polymer (A) is preferably prepared in accordance with the following process (1) or (2):
(1) A process for preparing the organic-inorganic hybrid polymer (A) by adding water in an amount within the above range to a mixture liquid of the specific silane compound (a1), the specific silyl group-containing polymer (a2) and the catalyst for hydrolyzing and condensation reaction to co-condense the specific silane compound (a1) and the specific silyl group-containing polymer (a2) for a reaction time of 5 to 12 hours at a temperature of 40 to 80°C. In this process, other additives such as the stability improver may be added as needed after the preparation of the organic-inorganic hybrid polymer (A).
(2) A process for preparing the organic-inorganic hybrid polymer (A) by adding water in an amount within the above range to the specific silane compound (a1) to subject the specific silane compound (a1) to a hydrolyzing and condensation reaction for 0.5 to 12 hours at a temperature of 40 to 80°C, and then adding and mixing the specific silyl group-containing polymer (a2) and the catalyst for hydrolyzing and condensation reaction to further conduct the hydrolyzing and condensation reaction for a reaction time of 0.5 to 12 hours at a temperature of 40 to 80°C. In this process, other additives such as the stability improver may be added as needed after the preparation of the organic-inorganic hybrid polymer (A).

In the above-described processes, when the metal chelate compound is used as the catalyst for hydrolyzing and condensation reaction, the stability improver is preferably added after the reaction.

The weight-average molecular weight of the organic-inorganic hybrid polymer (A) obtained by the above process is generally 3,000 to 200,000, preferably 4,000 to 150,000, more preferably, 5,000 to 100,000 in terms of polystyrene as measured by gel permeation chromatography.

### [Silica particles]

Silica particles (B) may be further contained in the metal-coating material according to the present invention. When the silica particles (B) are used, the particles may be used in the form of powder, or solvent sol or colloid dispersed in a polar solvent such as isopropyl alcohol or a nonpolar solvent such as toluene. The silica particles (B) may be surface-treated for improving dispersibility thereof.

The primary particle size of such silica particles (B) is generally 0.0001 to 1 µm, preferably 0.001 to 0.5 µm, particularly preferably 0.002 to 0.2 µm.

When the silica particles (B) are used in the form of solvent sol or colloid, the solid content concentration thereof is generally more than 0% by mass, but not more than 50% by mass, preferably 0.01% by mass or more to 40% by mass or less.

Among the silica particles (B) in the form of powder, examples of the surface-untreated silica particles include #150, #200 and #300 (products of Nippon Aerosil Co., Ltd.), and examples of the silica particles, the surfaces of which have been subjected to a hydrophobicity-imparting treatment, include R972, R974, R976, RX200, Rx300, RY200S, RY300 and R106 (products of Nippon Aerosil Co., Ltd.), SS50A (product of Tosoh Corporation), and Sylophobic 100 (product of Fuji Silysia Chemical Ltd.).

Examples of the silica particles (B) in the form of solvent sol or colloid include colloidal silica dispersed in an alcoholic solvent such as isopropyl alcohol, colloidal silica dispersed in a ketone solvent such as methyl isobutyl ketone and colloidal silica dispersed in a nonpolar solvent such as toluene (all, products of Nissan Chemical Industries, Ltd.).

The silica particles (B) may be added upon the preparation of the organic-inorganic hybrid polymer (A) or after the preparation of the organic-inorganic hybrid polymer (A).

The amount of the silica particles (B) used is generally more than 0% by mass, but not more than 80% by mass, preferably 5% by mass or more to 50% by mass or less based on the solid content of the organic-inorganic hybrid polymer (A).

### [Metal oxide particles]

Metal oxide particles (C) may be further contained in the metal-coating material according to the present invention. No particular limitation is imposed on the metal oxide particles (C) so far as the particles are particles of an oxide of a metal element. Specific examples thereof include particles of metal oxides such as antimony oxide, zirconium oxide, anatase-type titanium oxide, rutile-type titanium oxide, brookite-type titanium oxide, zinc oxide, tantalum oxide, indium oxide, hafnium oxide, tin oxide, niobium oxide, aluminum oxide, cerium oxide, scandium oxide, yttrium oxide, lanthanum oxide, praseodymium oxide, neodymium oxide, samarium oxide, europium oxide, gadolinium oxide, terbium oxide, dysprosium oxide, holmium oxide, erbium oxide, thulium oxide, ytterbium oxide, lutetium oxide, calcium oxide, gallium oxide, lithium oxide, strontium oxide, tungsten oxide, barium oxide, magnesium oxide and composites thereof, and oxides of composites of two or more metals among the above-described metals, such as indium-tin composite oxide.

Particles of a composite oxide of silicon oxide and a metal oxide, or particles of a metal oxide coated with silicon oxide may also be used as the metal oxide particles (C).

In the present invention, the above-described metal oxide particles (C) may be used either singly or in any combination thereof. The metal oxide particles (C) may be suitably selected. In the present invention, however, particles of at least one metal oxide selected from the group consisting of titanium oxide, zirconium oxide, aluminum oxide and zinc oxide are preferably used, and particles of anatase-type titanium oxide, rutile-type titanium oxide, zirconium oxide, aluminum oxide or zinc oxide are particularly preferably used.

When the metal oxide particles (C) are used, the particles may be used in the form of powder, or solvent sol or colloid dispersed in a polar solvent such as isopropyl alcohol or a nonpolar solvent such as toluene. The metal oxide particles (C) before the addition may be aggregated to form secondary particles. The metal oxide particles (C) may be surface-treated for improving dispersibility thereof.

The primary particle size of such metal oxide particles (C) is generally 0.0001 to 1 µm, preferably 0.001 to 0.5 µm, particularly preferably 0.002 to 0.2 µm.

When the metal oxide particles (C) are used in the form of solvent sol or colloid, the solid content concentration thereof is generally more than 0% by mass, but not more than 50% by mass, preferably 0.01% by mass or more to 40% by mass or less.

The metal oxide particles (C) may be added upon the preparation of the organic-inorganic hybrid polymer (A) or after the preparation of the organic-inorganic hybrid polymer (A).

When the metal oxide particles (C) are used in the form of powder, the particles can be dispersed by a publicly known dispersing machine, for example, ball mill, sand mill (bead mill or high-shear bead mill), homogenizer, ultrasonic homogenizer, nanomizer, propeller mixer, high shear mixer or paint shaker. Among these dispersing machines, ball mill for highly dispersed fine particle dispersion, sand mill (bead mill or high-shear bead mill) or paint shaker is preferably used.

The amount of the metal oxide particles (C) used is generally more than 0% by mass, but not more than 80% by mass, preferably 5% by mass or more to 50% by mass or less based on the solid content of the organic-inorganic hybrid polymer (A).

### [Protection method of metal]

In the present invention, the surface of a metal is coated with the metal-coating material, and the resultant coating layer is hardened, whereby a film is formed on the surface of the metal, and so the metal can be protected from discoloration or the like. No particular limitation is imposed on the coating method of the metal-coating material, and a method may be suitably selected according to a metal to be coated.

### [Light emitting device]

The light emitting device according to the present invention has a silver-plated member, silver electrode or sealing material coated with the metal-coating material.

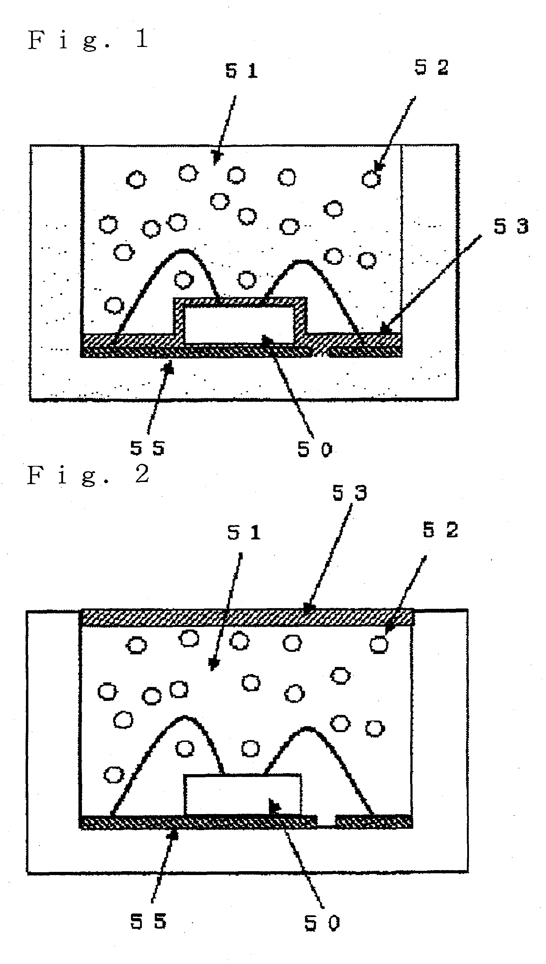

FIG. 1 to FIG. 3 typically illustrate examples in the case where the light emitting device according to the present invention was executed as a light emitting diode. In FIGS. 1 to 3, characters 50, 51, 52, 53 and 55 designate an LED device, a sealing material, a fluorescent substance, a coating layer formed by the metal-coating material according to the present invention, and a silver electrode, respectively.

As the LED device 50, may be used a blue LED device, white LED device or ultraviolet LED device.

In the example illustrated in FIG. 1, the fluorescent substance 52 is contained in the sealing material 51, and the coating layer 53 is formed so as to cover the LED device 50 and the silver electrode 55.

In the present invention, the coating layer 53 can be formed on the external surface of the sealing material 51 like the example illustrated in FIG. 2, thereby protecting the silver electrode 55 from sulfur or the like.

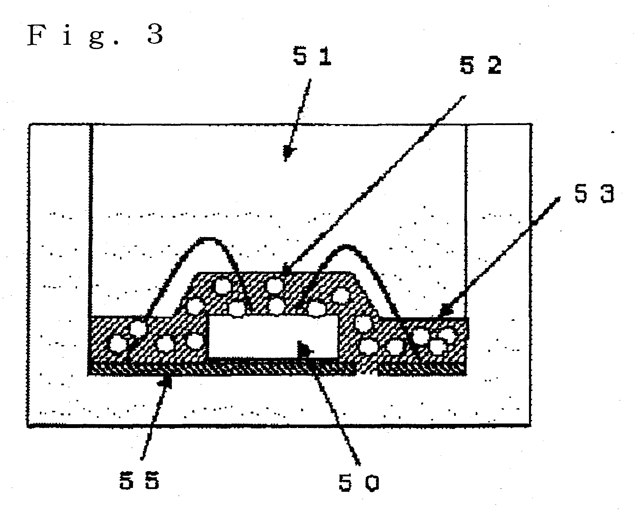

The fluorescent substance 52 can be contained in the coating layer 53 like the example illustrated in FIG. 3, thereby converting light emitted from the LED device 50.

### [EXAMPLES]

The present invention will hereinafter be described by the following Examples. However, the present invention is not limited by these Examples at all. Incidentally, all designations of "part" or "parts" as will be used in the following Examples and Comparative Examples mean part or parts by mass unless expressly noted.

Various measurements in Examples and Comparative Examples were conducted in accordance with the following respective methods.

### (1) GPC measurement

A weight-average molecular weight (hereinafter referred to as "Mw") was measured under the following conditions by gel permeation chromatography, and indicated as a value converted to polystyrene.
Apparatus: HLC-8120C (manufactured by Tosoh Corporation), column: TSK-gel Multipore HXL-M (manufactured by Tosoh Corporation), eluent: THF, flow rate: 0.5 mL/min, load: 5.0%, 100 µL.

### (2) Storage stability

After a metal-coating material is closely stored for a month at ordinary temperature in a polyethylene container, conditions of gelling and particle sedimentation in the metal-coating material were visually observed. When gelling was not caused, its viscosity is measured at 25°C by a BM type viscometer manufactured by Tokyo Keiki Co., Ltd. to evaluate it in accordance with the following standard:
A: A rate of change in viscosity before and after storage is 20% or lower;
B: A rate of change in viscosity before and after storage is higher than 20%.

### (3) Stability under exposure to sulfur

After 0.06 g of iron sulfide and 0.20 g of 47% by mass aqueous sulfuric acid were mixed in a pressure container 150 cm³ in volume, a 5 mm-square film obtained by hardening a metal-coating material under the prescribed conditions and having a thickness of 100 µm was immediately charged into the pressure container and closed (theoretical concentration of hydrogen sulfide: 10% by volume). After this pressure container was heated for 5 hours at 70°C and then cooled, the film was taken out of the container to observe the appearance of the film, thereby evaluating it in accordance with the following standard:
A: Not changed;
B: Slightly discolored;
C: Discolored to brown.

### (4) Silver blackening-inhibiting ability

A metal-coating material was charged into a commercially available surface-mounted LED package (with silver plating) so as to give a dry film thickness of 100 µm and hardened under the prescribed conditions, thereby preparing a sample for evaluation of silver blackening-inhibiting ability. After 0.06 g of iron sulfide and 0.20 g of 47% by mass aqueous sulfuric acid were mixed in a pressure container 150 cm³ in volume, the sample for evaluation of silver blackening-inhibiting ability was immediately charged into the pressure container and closed (theoretical concentration of hydrogen sulfide: 10% by volume). After this pressure container was heated for 5 hours at 120°C and then cooled, the sample for evaluation of silver blackening-inhibiting ability was taken out of the container to observe the appearance of the silver plating, thereby evaluating it in accordance with the following standard:
A : Not changed;
A-: Slightly discolored;
B : Somewhat discolored;
C : Discolored to black.

### [Preparation specific silyl group-containing polymer (a2)]

### <Preparation Example 1-1>

A reactor equipped with a flux condenser and an agitator was charged with 55 parts of methyl methacrylate, 5 parts of 2-ethylhexyl acrylate, 5 parts of cyclohexyl methacrylate, 10 parts of γ-methacryloxypropyltrimethoxysilane, 20 parts of glycidyl methacrylate, 5 parts of 4-(meth)acryloyloxy-2,2,6,6-tetramethylpiperidine, 75 parts of isobutyl alcohol, 50 parts of methyl ethyl ketone and 25 parts of methanol, and the contents were mixed and then heated to 80°C while agitating them. After a solution with 3 parts of azobisisovaleronitrile dissolved in 8 parts of xylene was added dropwise to this mixture over 30 minutes, a reaction was conducted for 5 hours at 80°C. After the reaction system was cooled, 36 parts of methyl ethyl ketone was added to the reactions system to obtain a solution of a specific silyl group-containing polymer (hereinafter referred to as "Polymer (a2-1)") having Mw of 12,000 as measured by the GPC method and a silicon content in solids of 1.1% by mass, said solution having a solid content concentration of 35%.

### <Preparation Example 1-2>

A solution of a specific silyl group-containing polymer (hereinafter referred to as "Polymer (a2-2)") having Mw of 13,000 and a silicon content in solids of 1.1% by mass, said solution having a solid content concentration of 35%, was obtained in the same manner as in Preparation Example 1-1 except that 20 parts of 2-hydroxyethyl methacrylate was used in place of 20 parts of glycidyl methacrylate.

### <Preparation Example 1-3>

A reactor equipped with a flux condenser and an agitator was charged with 30 parts of methyl methacrylate, 10 parts of n-butyl acrylate, 10 parts of γ-methacryloxypropyltrimethoxysilane, 20 parts of glycidyl methacrylate, 10 parts of 4-(meth)acryloyloxy-2,2,6,6-tetramethylpiperidine, 20 parts of 2-(2'-hydroxy-5'-methacryloxyethylphenyl)-2H-benzotriazole, 75 parts of isobutyl alcohol, 50 parts of methyl ethyl ketone and 25 parts of methanol, and the contents were mixed and then heated to 80°C while agitating them. After a solution with 4 parts of azobisisovaleronitrile dissolved in 10 parts of xylene was added dropwise to this mixture over 30 minutes, a reaction was conducted for 5 hours at 80°C. After the reaction system was cooled, 83 parts of methyl ethyl ketone was added to the reactions system to obtain a solution of a specific silyl group-containing polymer (hereinafter referred to as "Polymer (a2-3)") having Mw of 10,000 as measured by the GPC method and a silicon content in solids of 1.1% by mass, said solution having a solid content concentration of 30%.

### <Preparation Example 1-4>

A reactor equipped with a flux condenser and an agitator was charged with 70 parts of methyl methacrylate, 10 parts of 2-ethylhexyl acrylate, 5 parts of cyclohexyl methacrylate, 10 parts of γ-methacryloxypropyltrimethoxysilane, 5 parts of 4-(meth)acryloyloxy-2,2,6,6-tetramethylpiperidine, 75 parts of isobutyl alcohol, 50 parts of methyl ethyl ketone and 25 parts of methanol, and the contents were mixed and then heated to 80°C while agitating them. After a solution with 3 parts of azobisisovaleronitrile dissolved in 8 parts of xylene was added dropwise to this mixture over 30 minutes, a reaction was conducted for 5 hours at 80°C. After the reaction system was cooled, 35 parts of methyl ethyl ketone was added to the reactions system to obtain a solution of a specific silyl group-containing polymer (hereinafter referred to as "Polymer (a2-4)") having Mw of 12,000 as measured by the GPC method and a silicon content in solids of 1.1% by mass, said solution having a solid content concentration of 35%.

### <Preparation Example 1-5>

A reactor equipped with a flux condenser and an agitator was charged with a composition [X] composed of 92 parts of methyl methacrylate, 5 parts of γ-methacryloxypropyltrimethoxy-silane, 3 parts of 4-(meth)acryloyloxy-2,2,6,6-tetramethylpiperidine, 26 parts of isobutyl alcohol and 109 parts of butyl acetate, and the contents were mixed and then heated to 80°C while agitating them. After a solution with 2 parts of azobisisovaleronitrile dissolved in 8 parts of xylene was added dropwise to this mixture over 30 minutes, a reaction was conducted for 5 hours at 80°C. The reaction system was cooled to obtain a solution [5] of a specific silyl group-containing polymer (hereinafter referred to as "Polymer (a2-5)") having Mw of 8,000 as measured by the GPC method, said solution having a solid content concentration of 40%.

### [Preparation of metal-coating material]

### <Example 1>

A reactor equipped with an agitator and a flux condenser was charged with 24 parts of methyltrimethoxysilane and 10 parts of dimethyldimethoxysilane as the specific silane compounds (a1), 118 parts of the solution of Polymer (a2-1) as the specific silyl group-containing polymer (a2), 10 parts of isopropyl alcohol as the organic solvent, and 2 parts of a 75% diluted solution of aluminum diisopropoxy·ethylacetoacetate with isopropyl alcohol as the catalyst for hydrolyzing and condensation reaction, and the contents were mixed and then heated to 50°C while agitating them. After 6 parts (corresponding to 0.48 mol per mol of the OR² group in the specific silane compound (a1)) of water was added dropwise to this system over 30 minutes, a reaction was conducted for 4 hours at 60°C to obtain an organic-inorganic hybrid polymer having Mw of 13,000 as measured by the GPC method. Thereafter, 2 parts of acetylacetone was added as the stability improver, the resultant mixture was agitated for 1 hour and then cooled to room temperature, and 129 parts of methyl isobutyl ketone was added as a diluent solvent, thereby preparing a metal-coating material (1) having a solid content concentration of 20% by mass. The storage stability of the metal-coating material (1) was evaluated. As a result, it was ranked as A.

### <Examples 2 to 4>

Metal-coating materials (2) to (4) each having a solid content concentration of 20% by mass were prepared in the same manner as Example 1 except that the respective components were changed to their corresponding formulations shown in Table 1. The evaluation results of these metal-coating materials as to storage stability are shown in Table 1.

**[Table 1]**

| | Exanple 1 | Exanple 2 | Exanple 3 | Exanple 4 |
|---|---|---|---|---|
| Specific silane compounds (a1) [parts] | | | | |
| Methyltrimethoxysilane | 24 | 50 | 60 | 60 |
| Dimethyldimethoxysilane | 10 | 17 | 32 | 32 |
| Specific silyl group-containing polymer (a2) [parts] | | | | |
| Polymer (a2-1) (Solid content concentration 35 mass %) | 118 | - | - | - |
| Polymer (a2-2) (Solid content concentration 35 mass %) | - | 100 | - | - |
| Polymer (a2-3) (Solid content concentration 30 mass %) | - | - | 60 | - |
| Polymer (a2-4) (Solid content concentration 35 mass %) | - | - | - | 60 |
| Catalyst [parts] | | | | |
| Aluminum diisopropoxy-ethylacetoacetate (75% diluted with isopropyl alcohol) | 2 | 2 | 2 | 2 |
| Organic solvent [parts] | | | | |
| Isopropyl alcohol | 10 | 14 | 16 | 29 |
| Water [parts] | 6 | 12 | 16 | 16 |
| (Mol number per mol of OR²) | 0. 48 | 0. 48 | 0. 48 | 0. 48 |
| Stability improver [parts] | | | | |
| acetylacetone | 2 | 2 | 2 | 2 |
| Diluent solvent [parts] | | | | |
| Methyl isobutyl ketone | 123 | 150 | 149 | 150 |
| Weight-average molecular weight (Mw) | 13000 | 15000 | 12000 | 18000 |
| Metal-coating material | (1) | (2) | (3) | (4) |
| Storage stability | A | A | A | A |

### <Example 5>

A metal-coating material (5) was prepared by adding 25 parts of colloidal silica dispersed in isopropyl alcohol and having an average particle size of 10 nm and a solid content concentration of 20% by mass to 100 parts of the metal-coating material (1) obtained in Example 1. The storage stability of this metal-coating material (5) was evaluated. As a result, it was ranked as A.

### <Example 6>

A metal-coating material (6) was prepared by adding 5 parts of an isopropyl alcohol solution of di-n-butoxy· bis(acetylacetonato)zirconium having a solid content concentration of 15% by mass to 100 parts of the metal-coating material (1) obtained in Example 1 and sufficiently agitating the resultant mixture. A Teflon (trademark) sheet was coated with this metal-coating material (6) so as to give a dry film thickness of 100 µm, and the coating layer thus formed was hardened for 1 hour at 100°C to form a film. The stability of the resultant film under exposure to sulfur was evaluated. As a result, it was ranked as A.

### <Example 7>

A metal-coating material (7) was prepared in the same manner as in Example 6 except that the metal-coating material (2) obtained in Example 2 was used in place of the metal-coating material (1), and the stability of the metal-coating material (7) under exposure to sulfur was evaluated. As a result, it was ranked as A.

### <Example 8>

A metal-coating material (8) was prepared in the same manner as in Example 6 except that the metal-coating material (3) obtained in Example 3 was used in place of the metal-coating material (1), and the stability of the metal-coating material (8) under exposure to sulfur was evaluated. As a result, it was ranked as A.

### <Example 9>

A metal-coating material (9) was prepared in the same manner as in Example 6 except that the metal-coating material (4) obtained in Example 4 was used in place of the metal-coating material (1), and the stability of the metal-coating material (9) under exposure to sulfur was evaluated. As a result, it was ranked as A.

### <Example 10>

A metal-coating material (10) was prepared in the same manner as in Example 6 except that the metal-coating material (5) obtained in Example 5 was used in place of the metal-coating material (1), and the stability of the metal-coating material (10) under exposure to sulfur was evaluated. As a result, it was ranked as A.

### <Example 11>

A metal-coating material (11) was prepared by adding 5 parts of an isopropyl alcohol solution of di-n-butoxy·bis(acetylacetonato)zirconium having a solid content concentration of 15% by mass to 100 parts of the metal-coating material (1) obtained in Example 1 and sufficiently agitating the resultant mixture. This metal-coating material (11) was charged into a commercially available surface-mounted LED package (with silver plating) so as to give a dry film thickness of 100 µm, and dried for 1 hour at 100°C, thereby preparing a sample for evaluation of silver blackening-inhibiting ability to evaluate the silver blackening-inhibiting ability. As a result, it was ranked as A.

### <Example 12>

A metal-coating material (12) was prepared in the same manner as in Example 11 except that the metal-coating material (2) obtained in Example 2 was used in place of the metal-coating material (1), and the silver blackening-inhibiting ability of the metal-coating material (12) was evaluated. As a result, it was ranked as A.

### <Example 13>

A metal-coating material (13) was prepared in the same manner as in Example 11 except that the metal-coating material (3) obtained in Example 3 was used in place of the metal-coating material (1), and the silver blackening-inhibiting ability of the metal-coating material (13) was evaluated. As a result, it was ranked as A.

### <Example 14>

A metal-coating material (14) was prepared in the same manner as in Example 11 except that the metal-coating material (4) obtained in Example 4 was used in place of the metal-coating material (1), and the silver blackening-inhibiting ability of the metal-coating material (14) was evaluated. As a result, it was ranked as A.

### <Example 15>

A metal-coating material (15) was prepared in the same manner as in Example 11 except that the metal-coating material (5) obtained in Example 5 was used in place of the metal-coating material (1), and the silver blackening-inhibiting ability of the metal-coating material (15) was evaluated. As a result, it was ranked as A.

### <Example 16>

A reactor equipped with an agitator and a flux condenser was charged with 60 parts of methyltrimethoxysilane and 32 parts of dimethyldimethoxysilane as the specific silane compounds (a1), 60 parts of the solution of Polymer (a2-4) as the specific silyl group-containing polymer (a2), 29 parts of isopropyl alcohol as the organic solvent, and 2 parts of a 75% diluted solution of aluminum diisopropoxy·ethylacetoacetate with isopropyl alcohol as the catalyst for hydrolyzing and condensation reaction, and the contents were mixed and then heated to 50°C while agitating them. After 16 parts (corresponding to 0.48 mol per mol of the OR² group in the specific silane compound (a1)) of water was added dropwise to this system over 30 minutes, a reaction was conducted for 4 hours at 60°C to obtain a solution of an organic-inorganic hybrid polymer having Mw of 13,000 as measured by the GPC method. Thereafter, 2 parts of acetylacetone was added as the stability improver, the resultant mixture was agitated for 1 hour and then cooled to room temperature, and 150 parts of methyl isobutyl ketone was added as a diluent solvent, thereby preparing a solution having a solid content concentration of 20% by mass. This solution is referred to as "Polymer Solution (A-1)". To 100 parts of this Polymer Solution (A-1), were added 13 parts of zirconium oxide powder having a primary average particle size of 10 nm and 52 parts of isopropyl alcohol, and the powder was dispersed for 4 hours by a paint shaker to prepare a metal-coating material (16) having a solid content concentration of 20% by mass. The storage stability of the metal-coating material (16) was evaluated. As a result, it was ranked as A.

### <Example 17>

To 100 parts of a Polymer Solution (A-1) prepared in the same manner as in Example 16, were added 13 parts of aluminum oxide powder having a primary average particle size of 10 nm and 52 parts of isopropyl alcohol, and the powder was dispersed for 4 hours by a paint shaker to prepare a metal-coating material (17) having a solid content concentration of 20% by mass. The storage stability of the metal-coating material (17) was evaluated. As a result, it was ranked as A.

### <Example 18>

To 100 parts of a Polymer Solution (A-1) prepared in the same manner as in Example 16, were added 13 parts of zinc oxide powder having a primary average particle size of 10 nm and 52 parts of isopropyl alcohol, and the powder was dispersed for 4 hours by a paint shaker to prepare a metal-coating material (18) having a solid content concentration of 20% by mass. The storage stability of the metal-coating material (18) was evaluated. As a result, it was ranked as A.

### <Example 19>

A metal-coating material (19) was prepared by adding 7 parts of an isopropyl alcohol solution of di-n-butoxy·bis(acetylacetonato) zirconium having a solid content concentration of 15% by mass to 100 parts of the metal-coating material (16) obtained in Example 16 and sufficiently agitating the resultant mixture. A Teflon (trademark) sheet was coated with this metal-coating material (19) so as to give a dry film thickness of 100 µm, and the coating layer thus formed was hardened for 1 hour at 100°C to form a film. The stability of the resultant film under exposure to sulfur was evaluated. As a result, it was ranked as A.

### <Example 20>

A metal-coating material (20) was prepared in the same manner as in Example 19 except that the metal-coating material (17) obtained in Example 17 was used in place of the metal-coating material (16), and the stability of the metal-coating material (20) under exposure to sulfur was evaluated. As a result, it was ranked as A.

### <Example 21>

A metal-coating material (21) was prepared in the same manner as in Example 19 except that the metal-coating material (18) obtained in Example 18 was used in place of the metal-coating material (16), and the stability of the metal-coating material (21) under exposure to sulfur was evaluated. As a result, it was ranked as A.

### <Example 22>

A metal-coating material (22) was prepared by adding 5 parts of an isopropyl alcohol solution of di-n-butoxy·bis(acetylacetonato)zirconium having a solid content concentration of 15% by mass to 100 parts of the metal-coating material (16) obtained in Example 16 and fully agitating the resultant mixture. This metal-coating material (22) was charged into a commercially available surface-mounted LED package (with silver plating) so as to give a dry film thickness of 100 µm, and dried for 1 hour at 100°C, thereby preparing a sample for evaluation of silver blackening-inhibiting ability to evaluate the silver blackening-inhibiting ability. As a result, it was ranked as A.

### <Example 23>

A metal-coating material (23) was prepared in the same manner as in Example 22 except that the metal-coating material (17) obtained in Example 17 was used in place of the metal-coating material (16), and the silver blackening-inhibiting ability of the metal-coating material (23) was evaluated. As a result, it was ranked as A.

### <Example 24>

A metal-coating material (24) was prepared in the same manner as in Example 22 except that the metal-coating material (18) obtained in Example 18 was used in place of the metal-coating material (16), and the silver blackening-inhibiting ability of the metal-coating material (24) was evaluated. As a result, it was ranked as A.

### <Comparative Example 1>

After 60 parts of an alicyclic epoxy resin (CE2021, product of Daicel Chemical Industries, Ltd.), 66 parts of an acid anhydride (MH700, product of New Japan Chemical Co., Ltd.) and 0.7 parts of a hardening accelerator (UCAT18X, product of SAN-APRO Ltd.) were mixed and fully agitated, a Teflon (trademark) sheet was coated with the resultant mixture so as to give a dry film thickness of 100 µm, and the coating layer thus formed was hardened for 1 hour at 100°C to form a film. The stability of this film under exposure to sulfur was evaluated. As a result, it was ranked as C.

### <Comparative Examples 2>

A silicone sealing material (TSE3033A, TSE3033B, product of Momentive Performance Materials Inc.) comprising linear dimethyl polysiloxane as a main component was charged into a commercially available surface-mounted LED package (with silver plating) so as to give a dry film thickness of 100 µm, and dried for 5 hours at 150°C, thereby preparing a sample for evaluation of silver blackening-inhibiting ability to evaluate the silver blackening-inhibiting ability of this sample. As a result, it was ranked as C.

### <Example 25>

A reactor equipped with an agitator and a flux condenser was charged with 61 parts of methyltrimethoxysilane and 32 parts of dimethyldimethoxysilane as the specific silane compounds (a1), 160 parts of the solution [5] of Polymer (a2-5) as the specific silyl group-containing polymer (a2), 53 parts of isopropyl alcohol and 3 parts of butyl acetate as the organic solvent, and 3 parts of a 50% diluted solution of aluminum diisopropoxy·ethylacetoacetate with isopropyl alcohol as the catalyst for hydrolyzing and condensation reaction, and the contents were mixed and then heated to 50°C while agitating them. After 8 parts (corresponding to 0.40 mol per mol of the OR² group in the specific silane compound (a1)) of water was added dropwise to this system over 30 minutes, a reaction was conducted for 4 hours at 60°C to obtain a composition [25] containing an organic-inorganic hybrid polymer having Mw of 13,000 as measured by the GPC method and having (a1) content of 44% by mass in terms of completely hydrolyzed and condensed product. Thereafter, 2 parts of acetylacetone was added as the stability improver to the composition [25], the resultant mixture was agitated for 1 hour and then cooled to room temperature, and methyl isobutyl ketone was added as a diluent solvent, thereby preparing a metal-coating material [25] having a solid content concentration of 20% by mass.
To 100 parts of the metal-coating material [25], 5 parts of an isopropyl alcohol solution of di-n-butoxy·bis(acetylacetonato)zirconium having a solid content concentration of 15% by mass was added and fully agitated the resultant mixture. This mixture was charged into a commercially available surface-mounted LED package (with silver plating) so as to give a dry film thickness of 100 µm, and dried for 1 hour at 100°C, thereby preparing a sample [25] for evaluation of silver blackening-inhibiting ability.

### <Example 26>

A reactor equipped with an agitator and a flux condenser was charged with 36 parts of methyltrimethoxysilane and 19 parts of dimethyldimethoxysilane as the specific silane compounds (a1), 175 parts of the solution [5] of Polymer (a2-5) as a polymer derived from the specific silyl group-containing methyl (meth)acrylate, 53 parts of isopropyl alcohol and 3 parts of butyl acetate as the organic solvent, and 12 parts of a 50% diluted solution of aluminum diisopropoxy·ethylacetoacetate with isopropyl alcohol as the catalyst for hydrolyzing and condensation reaction, and the contents were mixed and then heated to 50°C while agitating them. After 8 parts (corresponding to 0.40 mol per mol of the OR² group in the specific silane compound (a1)) of water was added dropwise to this system over 30 minutes, a reaction was conducted for 4 hours at 60°C to obtain a composition [26] containing an organic-inorganic hybrid polymer having Mw of 13,000 as measured by the GPC method and having (a1) content of 30% by mass in terms of completely hydrolyzed and condensed product. Thereafter, 11 parts of acetylacetone was added as the stability improver to the composition [26], the resultant mixture was agitated for 1 hour and then cooled to room temperature, and methyl isobutyl ketone was added as a diluent solvent, thereby preparing a metal-coating material [26] having a solid content concentration of 20% by mass. To 100 parts of the metal-coating material [26], 5 parts of an isopropyl alcohol solution of di-n-butoxy·bis(acetylacetonato)zirconium having a solid content concentration of 15% by mass was added and fully agitated the resultant mixture. This mixture was charged into a commercially available surface-mounted LED package (with silver plating) so as to give a dry film thickness of 100 µm, and dried for 1 hour at 100°C, thereby preparing a sample [26] for evaluation of silver blackening-inhibiting ability.

### <Example 27>

A reactor equipped with an agitator and a flux condenser was charged with 12 parts of methyltrimethoxysilane and 7 parts of dimethyldimethoxysilane as the specific silane compounds (a1), 225 parts of the solution [5] of Polymer (a2-5) as a polymer derived from the specific silyl group-containing methyl (meth)acrylate, 53 parts of isopropyl alcohol and 3 parts of butyl acetate as the organic solvent, and 4 parts of a 50% diluted solution of aluminum diisopropoxy·ethylacetoacetate with isopropyl alcohol as the catalyst for hydrolyzing and condensation reaction, and the contents were mixed and then heated to 50°C while agitating them. After 3 parts (corresponding to 0.40 mol per mol of the OR² group in the specific silane compound (a1)) of water was added dropwise to this system over 30 minutes, a reaction was conducted for 4 hours at 60°C to obtain a composition [27] containing an organic-inorganic hybrid polymer having Mw of 13,000 as measured by the GPC method and having (a1) content of 10% by mass in terms of completely hydrolyzed and condensed product. Thereafter, 4 parts of acetylacetone was added as the stability improver to the composition [27], the resultant mixture was agitated for 1 hour and then cooled to room temperature, and methyl isobutyl ketone was added as a diluent solvent, thereby preparing a metal-coating material [27] having a solid content concentration of 20% by mass. To 100 parts of the metal-coating material [27], 5 parts of an isopropyl alcohol solution of di-n-butoxy·bis(acetylacetonato) zirconium having a solid content concentration of 15% by mass was added and fully agitated the resultant mixture. This mixture was charged into a commercially available surface-mounted LED package (with silver plating) so as to give a dry film thickness of 100 µm, and dried for 1 hour at 100°C, thereby preparing a sample [27] for evaluation of silver blackening-inhibiting ability.

Storage stability of the compositions [25] to [27] and silver blackening-inhibiting ability of the samples [25] to [27] were evaluated, and heat-resistance and light-resistance of the compositions [25] to [27] were evaluated in accordance with the following respective methods.

### (5) Heat-resistance

A quartz glass plate was coated with each of the compositions [25] to [27] to give a dry film thickness of 100µm, the film was dried at 100°C for 1 hour and then further dried at 120°C for 1 hour thereby forming a hardened film. After the resultant hardened film was stored at 120°C for 500 hours, the appearance of the hardened film was observed with eyes to evaluate about discoloration and occurrence of crack in the film according to the following standard:
Discoloration
A: No discoloration
B: Slight discoloration
C: Yellow discoloration
Occurrence of crack
A: No occurrence
B: Small quantity of crack occurred
C: Crack occurred in whole surface

### (6) Light-resistance

A quartz glass plate was coated with each of the compositions [25] to [27] to give a dry film thickness of 100µm, the film was dried at 100°C for 1 hour and then further dried at 120°C for 1 hour thereby forming a hardened film. After the resultant hardened film was irradiated with ultraviolet rays from a spot-UV irradiation apparatus SP-VII (Product of Ushio Inc.) in which rays having wavelength of 350nm or shorter were cut, with illumination intensity of 5000 mW/cm2 for 500 hours, and then the appearance of the hardened film was observed with eyes to evaluate about UV-resistance and evaluate according to the following standard:
A: No change in appearance
B: Yellow discoloration
C: Burned to scorch in black

**Table 2**

| | | | Example 25 | Example 26 | Example 27 |
|---|---|---|---|---|---|
| Composition | Methyltrimethoxy silane | | 61 | 36 | 12 |
| | Dimethyltrimethoxy silane | | 32 | 19 | 7 |
| | Polymer(a2-5) Solid content concentration 40% | | 160 | 175 | 225 |
| Result of evaluation | Storage stability | | A | A | A |
| | Heat- resistance | Discoloration | A | A | A |
| | | Occurrence of crack | A | A | A |
| | Light-resistance | | A | A | A |
| | Silver blackening-inhibiting ability | | A | A | A |

Provided is a metal-coating material excellent in sulfur barrier property and transparency, a method for protecting a metal using the metal-coating material, and a light emitting device permitting high luminance and long life. The metal-coating material contains a polymer (A) obtained by subjecting at least one silane compound (a1) selected from the group consisting of at least one organosilane represented by the formula (1): R¹ₙSi(OR²)₄₋ₙ, wherein R¹ means a monovalent organic group having 1 to 8 carbon atoms, with the proviso that when two organic groups are present, the groups may be the same or different from each other, R² denotes, independently of each other, an alkyl group having 1 to 5 carbon atoms or an acyl group having 1 to 6 carbon atoms, and n is an integer of 0 to 2, a hydrolyzate of the organosilane and a condensate of the organosilane, and a polymer (a2) having a silyl group containing a silicon atom bonded to a hydrolyzable group and/or a hydroxyl group to a hydrolyzing and condensation reaction.

## Claims

1. A metal-coating material comprising a polymer (A) obtained by subjecting at least one silane compound (a1) selected from the group consisting of at least one organosilane represented by the following formula (1):
R¹ₙSi(OR²)₄₋ₙ (1)
wherein R¹ means a monovalent organic group having 1 to 8 carbon atoms, with the proviso that when two organic groups are present, the groups may be the same or different from each other, R² denotes, independently of each other, an alkyl group having 1 to 5 carbon atoms or an acyl group having 1 to 6 carbon atoms, and n is an integer of 0 to 2, a hydrolyzate of the organosilane and a condensate of the organosilane, and a polymer (a2) having a silyl group containing a silicon atom bonded to a hydrolyzable group and/or a hydroxyl group to a hydrolyzing and condensation reaction.

2. The metal-coating material according to claim 1, wherein the polymer (A) is obtained by subjecting the silane compound (a1) and the polymer (a2) to the hydrolyzing and condensation reaction at a mass ratio (Wa1/Wa2) ranging from 5/95 to 95/5 (assuming that Wa1 + Wa2 is 100) in terms of a ratio of a content (Wa1) of a completely hydrolyzed and condensed product of the silane compound (a1) to a solid content (Wa2) of the polymer (a2).

3. The metal-coating material according to claim 1 or 2, wherein the polymer (a2) is such that the content of the silyl group containing the silicon atom bonded to the hydrolyzable group and/or the hydroxyl group is 0.1 to 2% by mass in terms of a content of the silicon atom.

4. The metal-coating material according to any one of claims 1 to 3, wherein the polymer (a2) has the specific silyl group and contains a structural unit derived from methyl (meth)acrylate in an amount of 50-99% by mass.

5. The metal-coating material according to any one of claims 1 to 4, which further comprises silica particles.

6. The metal-coating material according to any one of claims 1 to 4, which further comprises metal oxide particles.

7. The metal-coating material according to claim 6, wherein the metal oxide particles are composed of at least one selected from the group consisting of titanium oxide, zirconium oxide, aluminum oxide and zinc oxide.

8. The metal-coating material according to any one of claims 1 to 7, which is used for silver.

9. The metal-coating material according to any one of claims 1 to 8, which is used for a silver electrode.

10. A method for protecting a metal, comprising coating the surface of the metal with the metal-coating material according to any one of claims 1 to 9.

11. A light emitting device comprising a silver-plated member, silver electrode or sealing material coated with the metal-coating material according to any one of claims 1 to 9.
